# EUROPEAN PATENT APPLICATION

(11) **EP 3 264 491 A1**
(43) Date of publication of application: **03.01.2018**
(21) Application number: 16176699.3
(22) Date of filing: 28.06.2016
(51) Int. Cl.: H01M 2/10, H01M 2/20, H01M 10/42, H01M 10/44, H01M 10/46, H02J 7/00

(54) **MODULAR ENERGY SYSTEM FOR STORING AND RELEASING ENERGY**

(71) Applicant: Wattsun pop-up power B.V., 6827 AV Arnhem (NL)
(72) Inventor: Schurink, Paulus Johannes Jacobus Maria, 8181 NA Heerde (NL); Bergman, Lucas Antonius Martijn, 6512 DA Nijmegen (NL); Olieslagers, Koen Jozef, 6822 CA Arnhem (NL)
(74) Representative: Arnold + Siedsma

(57) **Abstract**

A modular system (1) for storing and outputting electrical energy, the system comprising a stack, the stack (10) comprising a plurality of power packs (200, 300) removably stacked one on top of the other. Only the outlet power pack (200) is configured to provide electrical power to a load, while the non-outlet power packs (300) only exchange electrical power via a neighbouring power pack (200, 300) of the stack (10). Each non-outlet power pack only provides power from its internal battery to its power coupling module (304) in the stacked state in order to reduce the risk of sudden power surges or safety hazards during assembly of the power packs (200,300).

## Description

### Field of the Invention

The present invention relates to a modular energy system for storing and releasing energy to a wide range of electrical loads. More in particular, the present invention relates to an energy system comprising a plurality of power packs that are portable, removably stackable, mutually electrically connectable, rechargeable, etc. in a modular way.

### Background of the Invention

Due to the implementation of power generating stations, like photovoltaic systems and wind turbines, nowadays the generation of electrical energy is more and more decentralized. Hence, in order to minimize energy losses originating from transmission and distribution of electrical energy, such power stations are preferably located close to the load they serve.

Yet such decentralized power stations are mostly dependent regarding to the instantaneous level of power generation on parameters out of their control. Such parameters can be for example sun radiation characteristics or wind speed.

Furthermore, there is also the tendency to become insofar as possible so-called energy independent by going off-grid and be self-supporting from an electrical energy point of view. Additionally, besides going off-grid also the need exist to be able to make use of the produced electrical energy on remote places with reference to the location of the generation.

Hence there is a need for an autonomous system for storing and releasing electrical energy. Such a system is useful in an off-grid context, for example, when access to the electrical grid is not available or desired, in a context in which the required reliability or continuity of the electrical grid cannot be assured. This could for example be the case in remote locations or locations where there is a temporary need for an electric energy supply such as for example on construction sites, at music festivals, etc. A generally known solution is to provide a system comprising one or more power packs, which example comprise a battery for storing electrical energy. The battery of the power pack can for example be charged at a time when or a location where there is an electric grid available. Subsequently the power pack can then be put to use as an electric power supply at a location or at a time when no electric grid is available by outputting the stored power of its battery to a connected electric load. Once the battery of the power pack is depleted it must be subjected to a further charging cycle before it can subsequently be used again as an off-grid or stand-alone power source. It is clear that instead of or in addition to charging the power pack by connecting it to an electric grid, it is also possible to make use of for example solar panels, wind mills, etc. or other suitable renewable, temporary or non-continuous power sources, which can for example be provided at the remote off-grid location where the power packs are deployed as a stand-alone power source.

Particular embodiments of such systems for storing and releasing electrical energy are known from the prior art, such as DE102013108640 A1 or US2013/0183562 A1. Such systems provide for a modular approach in which a system comprises a plurality of power packs which can be coupled in a modular way. Especially in the context of a temporary deployment of such a system as a stand-alone power source, for example on a construction site, at a temporary event at a remote location, etc., this allows to adapt the system in a simple way to match the desired storage capacity, power level, etc. by simply making use of a suitable amount of coupled power packs.

In US2013/0183562 A1 discloses a system comprising a plurality of stackable battery packs. A suitable number of battery packs can be proved and combined to provide a desired power pack to suit an intended application and load device. An embodiment of the system comprises a stack of a plurality of battery packs and an invertor module. The battery packs output DC power and can be chained by means of electrical cables to provide this DC power to the invertor module which then for example converts this DC power to output a desired level of AC power, for example at a voltage level of 110V or 220V. The electrical connections between the different modules are achieved by the use of cables. This however demands extensive technical measures to ensure correct operation by a user lacking a sufficient level of technical knowledge as, in case of improper coupling of the cables damage to the device can occur. Use is for example made of different sizes of connectors etc. in order to ensure that the correct end of the cable can only be inserted in the correct corresponding connect. However, even then damage can occur, for example when a user inadvertently tries to force a cable end in a connector of which the size does not match, thereby resulting in damage to the cable end, connector and/or the electrical systems of the device.

In DE102013108640 A1 this instead of making use of cables for coupling a stack of power banks comprising a battery, use is made of an electrical connector integrated into a mechanical coupling. This system comprises a stack comprising a plurality of such power banks stacked on top of each other. At the bottom of the stack there is arranged a charging module to which for example a solar panel can be coupled, on which the power banks comprising a battery are stacked, and which is also coupled by means of a mechanical coupling comprising an electric connector to the stack of power banks to provide electric power for charging the batteries of the power banks. At the top of the stack there is arranged an output module to which an electrical load can be connected. This output module also being connected to the top power bank by means of a mechanical coupling comprising an electrical connector and in this way receiving electrical power from the batteries of the power banks.

Although such system allow for a certain level of modularity as the particular number of power banks in the stack can be adapted to the required needs. It is however clear that such system can only be put in operation once the desired number of power packs for the stack is chosen and the required connections are established between the power packs and an output module or invertor module of the stack. Once such a stack is then put in operation, the connections between the power packs and the output module must remain intact. During operation, this means, when electric power is provided by an output module or invertor module to an electric load, the configuration of the stack cannot be changed without the risk of interrupting the power supplied to the electric load. For example, when during operation a battery of a power bank runs depleted it is not possible to easily extract such a power bank from the stack, as at least the output module or inverter module and/or other power banks will be stacked on top of it. Additionally, removal of a power bank during operation would require disconnecting the cables or connectors of this power bank, thereby interrupting the coupling of the output module or invertor module with some or in a worst scenario even all of the other power banks of the stack, thereby leading to the risk of insufficient power being supplied or even interruption of the power supplied to the electric load. Still further, as during operation large currents are often flowing through the connectors or cables of the power packs in the stack, a sudden disconnection of the connectors or cables often results in unacceptable power surges leading to the risk of damaging electronic circuits and leading to safety and fire hazards because of electric arc formation during disconnection. Similar problems occur when during operation a power bank would be added to the stack as when establishing a coupling of the new power bank with the other power banks of the stack, this would also lead to the risks associated with sudden power surges, electric arc formation, etc.

It is therefore an objective of the present invention to alleviate the above drawbacks and to provide an improved solution for storing and releasing energy in a modular energy system. There remains a need for a system with an improved level of modularity, in which, especially during operation of such a system power packs can be added and/or removed in an efficient and simple way, with a reduced risk for interruption of the operation of the system and a reduced risk for power surges, and safety hazards. Additionally it is desired to achieve this in a way that improves modularity and robustness, while still also ensuring an increased efficiency in the transfer of power from the power banks to a connected electric load.

### Summary of the Invention

This objective is achieved, in a first aspect, by a modular system for storing and outputting electrical energy, the system comprising a stack, the stack comprising a plurality of power packs removably stacked one on top of the other, each power pack comprising a battery; and a power coupling module configured such that, when stacked, it is connected to the power coupling module of neighbouring power packs for the exchange of electrical power; and a power controller module coupled to the battery and power coupling module and configured to control the power exchange from the battery to the power coupling module characterised in that the stack comprises only one outlet power pack configured to provide electrical power to a connected external electric device and one or more non-outlet power packs configured to only exchange electrical power via a neighbouring power pack of the stack, wherein the outlet power pack further comprises a power outlet module coupled to its power coupling module, its power outlet module configured to control the electric power received from its power coupling module and outputted to a connected external electrical device; and each non-outlet power pack further comprises a sensor module coupled to the power controller module and configured to detect a stacked state when this non-outlet power pack is stacked in the stack and a non-stacked state when this non-outlet power pack is not stacked in the stack; and its power controller module is further configured to control the power exchange in such a way that there is only provided power from its battery to its power coupling module after its sensor module has detected the stacked state.

In this way a system with an improved level of modularity is achieved. As the power packs, by means of their sensor are able to detect themselves when they are being added or removed from the stack of the system. When combined with the fact that a power bank will only start providing power after it has detected it was securely added to the stack, this means, when it sensor has detected it has reached the stacked state, in this way a simple and efficient way is provided for adding such a non-outlet power bank to a stack, even while it is in operation, with a reduced risk for sudden power surges or safety hazards. In this way, when a non-outlet pack is added to the stack, no power is transferred from its battery until after it has reached a safe and reliable connection with the power coupling module of its neighbouring power pack, thereby reducing the risks for electric arc formation. Additionally an uncontrolled sudden power surges can also be avoided as the power controller module of the added non-outlet power pack can for example, after the stacked state was detected, initiate any power exchange with its power coupling module in a controlled way. Additionally, as the stack comprises one outlet module which can be connected to an electric load, and this outlet power pack also comprises a battery also coupled via a power coupling module to its power outlet module similar as the non-outlet power packs. In this way an improved level of modularity and robustness is achieved as this allows, during operation of the system, for a continuous power supply to an electric load connected to the outlet power packs, even when any or all of the non-outlet power packs are removed from the stack, for example because they are depleted and need replacement by new fully charged non-outlet packs that can be subsequently added to the power stack without interruption of the operation of the system. Additionally as the path from the battery from any of the power packs in the stack to power outlet module of the outlet power pack comprises a minimal number of components, namely only a power controller module followed by the power coupling modules, an increased level of modularity, robustness and efficiency can be guaranteed as power loss along the path to the electric load is minimized, the risk for component failure is reduced and design complexity is reduced. Finally also user friendliness is increased as it is clear to a user of a system that an electric load can only be connected to the power outlet module of the outlet power pack and coupling of the power packs of the stack to each other is performed by simply stacking the power packs on top of each other.

According to an embodiment the power controller module of the non-outlet power pack is further configured to control the power exchange in such a way that the power exchange from its battery to its power coupling module is interrupted after its sensor module has detected the non-stacked state.

A controlled interruption of power supply from a power pack when it is being removed from the stack is made possible in this way, thereby reducing the risk for arc formation and related risks, such as for example short circuit, etc. This improves modularity as it ensures for example a safe removal of depleted power pack from the stack, even when the system is and remains in operation. Additionally user friendliness is also improved as non-outlet power packs can simple be removed from stack without any further concerns for the power supplied by the system to devices of the user. It is further also clear that user friendliness is improved as addition or removal of non-outlet power packs to and from the stack can be performed without requiring any special knowledge or action from the user such as for example disconnecting or connecting cables, matching different connectors, following a specific connect or disconnect routine in which the power supplied by the system must be interrupted before, during or after removal or addition of power packs to the system, etc.

Preferably, during removal of a power pack from the stack, the power coupling module of the power pack being removed, remains in a connected state with the power coupling module of its neighbouring power pack while moving away from the stacked state at least until the non-stacked state is reached. This means that when the distance of the power pack to the stack increases the sensor will detect the non-stacked state when a distance is reached, which is smaller than the distance which can be covered by the power coupling modules of neighbouring packs without disconnecting the exchange of electrical power. In this way the power exchange from the power pack being removed can be interrupted in a controlled way during a first part of the movement for removing the power pack from the stack in which the power pack is already lifted from the stack but not yet electrically disconnected from the stack. Subsequently, when this movement for removing the power pack from the stack is continued, such that also the electrical connection with the stack is interrupted, the power exchange from the power pack being removed will already have been interrupted in a controlled way, thereby reducing the drawbacks and risks identified above. In order to ensure a continued electric coupling during the first part of the removal as identified above, the power coupling modules of neighbouring power packs, in the stacked state, for example overlap over a predetermined distance along the removal direction, such that a movement along this direction over this predetermined distance can occur without interrupting the electrical coupling between the power pack being removed and its neighbouring power pack in the stack.

According to an embodiment the outlet power pack is the lowermost power pack of the stack.

It is an advantage that the outlet power pack is the lowermost power pack of the stack since therefore replacement, addition and/or removal of non-outlet power packs to the stack can be efficiently performed by removing and/or adding power packs to the top of the stack which is readily accessible. Additionally during such modifications, the position of the outlet power pack at the bottom of the stack is not affected, which is advantageous when continued operations is desired of the system for an external electric device, which is connected to the stack or only the outlet power pack.

According to an embodiment the sensor module of the non-outlet power pack is further configured to detect the stacked state when its non-outlet power pack is stacked on top of another power pack of the stack.

It is an advantage that the stacked state is detected by the sensor module when its non-outlet power pack is stacked on top of another power pack, since therefore non-outlet power packs can easily be added to or removed from the accessible top of the stack.

According to an embodiment the sensor module is further configured such that during addition of its non-outlet power pack to the stack, its power coupling module is already coupled to the power coupling module of the neighbouring power pack before the stacked state is detected; and/or during removal of its non-outlet power pack from the stack, its power coupling module is not yet decoupled from the power coupling module of the neighbouring power pack before the non-stacked state is detected.

Since coupling of the power coupling module of a non-outlet power pack a power coupling module of a neighbouring power pack is not making or breaking the power exchange of the power pack being added or removed, but the detection of the stacked state or non-stacked state by the sensor module allows the power controller module to initiate or interrupt the power exchange in a controlled way after the power coupling module of the power pack being added is already coupled to that of a neighbouring power pack of the stack, or before the power coupling module of the power pack being removed is already decoupled from the power coupling module of a neighbouring power pack of the stack, the non-outlet power pack can be added or removed from the stack in a safe way.

According to an embodiment the power controller module of the non-outlet power pack is further configured to only allow unidirectional exchange of electrical power from the battery towards the power coupling module.

Since the power controller is configured to only allow unidirectional exchange of electrical power from the battery towards the power coupling module, the advantage is that the charging of a battery of a power pack by use of electrical power originating from a battery of another power pack is prevented and therefore the efficiency of the stack is elevated.

According to an embodiment the outlet power pack further comprises:
- only the outlet power pack further comprises an internal charger module coupled to its battery and its power coupling module and configured to control the power exchange from its power coupling module to its battery during a charging operation; and/or
- the power packs respectively further comprise an external charger module not coupled to its power coupling module and coupled to its battery, and configured to control the power exchange from an external power supply to its battery during a charging operation.

It is an advantage that the outlet power pack further comprises a charger module, since, because it is coupled to its battery and power coupling module, the battery can be charged even if an external electric device is connected to the outlet power pack. Furthermore, it is also an advantage that other devices, like for example solar panels, can be coupled to the charger module in order to charge the battery.

According to an embodiment there is provided a system, wherein:
- each power pack further comprises:
   - a charger coupling module configured such that, when stacked, it is connected to the charger coupling module of neighbouring power packs for the exchange of electrical power; and
- each non-outlet power pack further comprises:
   - a charger controller module coupled to the battery and the charger coupling module and configured to control the power exchange from the charger coupling module to the battery; and
- the outlet power pack comprises:
   - an external charger module not coupled to its power coupling module and coupled to its charger coupling module, and configured to control the power exchange from an external power supply to its charger coupling module during a charging operation.

In this way, when the non-outlet power packs are present in the pack, and an external power supply is connected to the external charger module of the outlet power pack, the non-outlet power packs of the stack can also be charged from this external charger module in a controlled, efficient and robust way, without affecting the power exchange along the power coupling modules.

According to an embodiment a power coupling module comprising at least one pair of conductors each comprising a coupling part positioned such that it is coupled to a corresponding coupling part of a neighbouring power pack of the stack.

According to an embodiment a coupling part is resiliently mounted such that its contact surface clasps the contact surface of a corresponding coupling part of a neighbouring power pack of the stack.

Since the coupling part is resiliently mounted and its contact surface clasps the contact surface of a corresponding coupling part, a good joint face from an electrical point of view is assured resulting in a low electric resistance between the corresponding coupling parts. Furthermore, it is also an advantage to use resiliently coupled connections because a mechanical connection between neighbouring power packs is achieved.

According to an embodiment the coupling part comprises a resiliently mounted electrical conductive plate.

The advantage of using a resiliently mounted electrically conductive plate, such as for example a copper plate, is that a low electric resistance between coupling parts is obtained and a reliable coupling can be ensured both in the stacked state and while progressing from the stacked state to the non-stacked state or vice versa, thereby allowing for a certain distance between neighbouring power packs to be covered without a disconnection of the respective coupling modules of neighbouring power packs.

Preferably also the charger coupling modules of the power packs are embodied similarly as one or more of the preferred embodiments of the power coupling modules mentioned above.

According to an embodiment a power pack comprises supports mounted on its bottom wall in such a way that they formally corresponds to notches on the top wall of a neighbouring power pack in the stack and wherein the supports and coupling parts are rotational symmetrical arranged on its bottom wall with respect to the midpoint of the bottom wall.

Thus, supports are mounted on the bottom wall of a power pack, while on the top wall notches are shaped in a form that corresponds to the supports. Moreover, the supports, and consequently also the notches, and the coupling parts of a power pack are rotational symmetrical with respect to the midpoint of the bottom wall arranged.

The advantage of mounting supports and shaping notches which correspond to these supports is that improper manipulation when stacking a power pack in the stack is minimized. Furthermore, by arranging them together with the coupling parts in a rotational symmetrical way with respect to the midpoint of the bottom wall, it is also an advantage that more than one way exists to stack a power pack in the stack.

Although the sensor module might comprise any suitable sensor which is suitable to detected the stacked and non-stacked state, such as for example a simple contact sensor comprising a simple mechanical switch or any other suitable proximity sensor, it is preferred that the sensor module comprises a non-contact sensor as this allows for a more robust and shielded operation of the sensor module.

According to an embodiment a sensor module for example might comprise a reed switch and a neighbouring power pack comprises a permanent magnet, the reed switch and the permanent magnet positioned such that a stacked state and/or non-stacked state is detected.

Hence, a reed switch and permanent magnet or other suitable non-contact type proximity or distance sensors, might be positioned in a power pack respectively a neighbouring power pack is such a way that a change state of the reed switch occurs when a power pack is stacked on top of another power pack and/or is removed from the stack.

The advantage of using a suitable non-contact sensor and particularly a reed switch is that no physical connection is needed between to power packs in order to detect a change state in a robust way.

According to a second aspect there is disclosed a method operating a system according to the first aspect of the disclosure, wherein the method comprises the steps of detecting a stacked state when its non-outlet power pack is stacked in the stack, and a non-stacked state when its non-outlet power pack is not stacked in the stack by the sensor module of each non-outlet power pack; and controlling the power exchange in such a way that there is only provided power from its battery to its power coupling module after its sensor module has detected the stacked state by the power controller module of each non-outlet power pack.

According to an embodiment there is provided a method which comprises the further steps of:
- the power controller module of the power pack detecting the voltage of its battery and at its power coupling module;
- the power controller module controlling the power exchange in such a way that there is only provided power from its battery to its power coupling module when the voltage of its battery is higher than or equal to the voltage detected at of the power coupling module.

This provides for a particularly simple and efficient setup as the power packs, which preferably make use of batteries of a similar type and of a similar voltage level, can preferably be directly coupled to the power coupling module without the need for conversion of the voltage level and associated losses. Additionally this particularly simple control scheme ensures that the power pack with the battery with the highest stored power level is typically used, without needing any centralised control or coordination amongst the different power packs of the stack.

According to a further embodiment the method further comprises the step of:
- the power controller module of the outlet power pack only providing power from its battery to its power coupling module, if the power received by its power coupling module from the non-outlet power packs of the stack is lower than:
- a predefined threshold;
- the power required by its power outlet module.

The advantage by doing so is that the battery of a outlet power pack is preferably used less than that of non-outlet power packs of the stack to provide electric power so that it remains available as fall back, for example during replacement of non-outlet power packs of which the battery is depleted and hence continuity of providing electric power can be assured.

According to an embodiment the method further comprises the step of:
- the internal charger module of the outlet power pack charging the battery of the outlet power pack:
   - when the voltage of the battery is lower than the voltage of the power coupling module;
   - until the battery reaches a predetermined voltage or stored power level;
   - when the voltage or stored power level of the battery is below a predetermined threshold; and/or
   - the power required by its power outlet module is lower than:
      ▪ a predetermined threshold; and/or
      ▪ the power available to its power coupling module from the non-outlet power packs.

In this way the power of the batteries of the stack is exchanged with an increased efficiency while still ensuring sufficient robustness and increased modularity. Only the battery of the outlet power pack is able to be charged from the power of other batteries in the stack in order to ensure continued operation even when all other non-outlet power packs of the stack are for example being exchanged for replenished non-outlet power packs. All other battery power is directed with an increased efficiency to the power outlet module. This also limits charging and decharging cycles the batteries of the power packs are subjected to, thereby further increasing robustness and longevity of the power packs.

According to a further embodiment of further comprises the step of:
- the charger controller module of the non-outlet power pack charging the battery of the non-outlet power pack:
   - when the voltage of the battery is lower than the voltage of the power coupling module;
   - until the battery reaches a predetermined voltage or stored power level;
   - when the voltage or stored power level of the battery is below a predetermined threshold; and/or
   - the power needed by the charger controller module is lower than:
      ▪ a predetermined threshold; and/or
      ▪ the power available to its charger coupling module from the external charger module of the outlet power pack.

In this way, when the non-outlet power packs are present in the pack, and an external power supply is connected to the external charger module of the outlet power pack, the non-outlet power packs of the stack can also be charged from this external charger module in an efficient and robust way, without affecting the power exchange along the power coupling modules.

According to a third aspect of the invention there is provided an outlet power pack for use in a modular system according to the first aspect of the invention, wherein the outlet power pack comprises:
- a battery; and
- a power coupling module configured such that, when stacked, it is connected to the power coupling module of neighbouring power packs for the exchange of electrical power; and
- a power controller module coupled to the battery and power coupling module and configured to control the power exchange from the battery to the power coupling module; and
- a power outlet module coupled to its power coupling module, its power outlet module configured to control the electric power received from its power coupling module and outputted to a connected external electrical device,

According to a fourth aspect of the invention there is provided a non-outlet power pack for use in a modular system according to the first aspect of the invention, wherein the non-outlet power pack comprises:
- a battery; and
- a power coupling module configured such that, when stacked, it is connected to the power coupling module of neighbouring power packs for the exchange of electrical power; and
- a power controller module coupled to the battery and power coupling module and configured to control the power exchange from the battery to the power coupling module;
- a sensor module coupled to the power controller module and configured to detect a stacked state when this non-outlet power pack is stacked in the stack and a non-stacked state when this non-outlet power pack is not stacked in the stack; and its power controller module is further configured to control the power exchange in such a way that there is only provided power from its battery to its power coupling module after its sensor module has detected the stacked state,
and configured to only exchange electrical power via a neighbouring power pack of the stack.

### Brief Description of the Drawings

Fig. 1 schematically shows an embodiment of a system comprising a stack of power packs;
Fig. 2 schematically shows of an embodiment of an outlet power pack for use in the embodiment of Fig. 1;
Fig. 3 schematically shows of an embodiment of a non-outlet power pack for use in the embodiment of Fig. 1;
Fig. 4 illustrates a schematically presentation of an arrangement of a reed switch and a corresponding permanent magnet;
Fig. 5 schematically shows a perspective view of a further embodiment of a system comprising a stack of power packs;
Fig. 6 schematically shows a perspective view of an embodiment of an outlet power pack for use in the embodiment of Fig. 5;
Fig. 7 schematically shows a perspective view of an embodiment of a non-outlet power pack for use in the embodiment of Fig. 5;
Fig. 8 schematically shows a perspective view of an embodiment of a power coupling module for use in an embodiment of an outlet power pack similar as shown in Figure 6;
Fig. 9 schematically shows a perspective view of a power coupling module for use in an embodiment of a non-outlet power pack similar as shown in Figure 7; and
Fig. 10 schematically shows an alternative embodiment of a system similar as shown in Figure 1.

### Detailed Description of Embodiment(s)

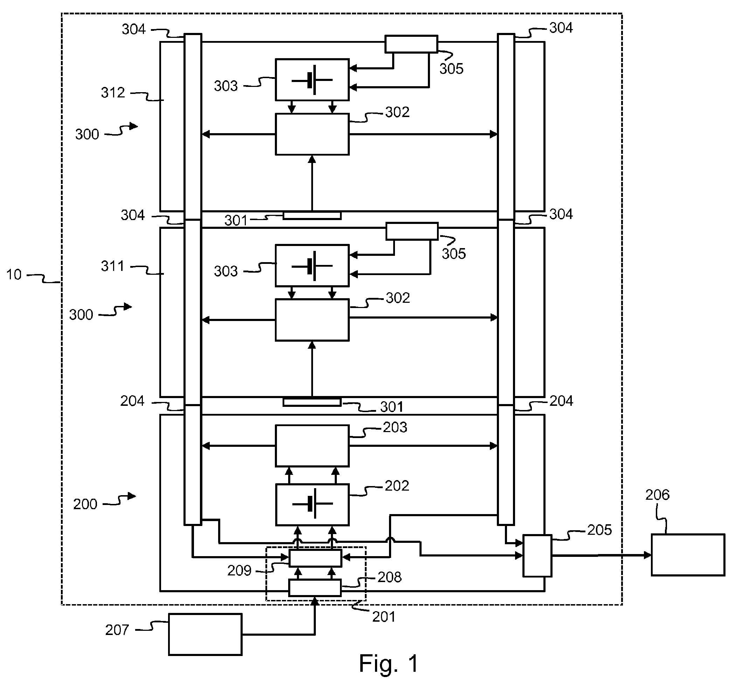

According to an embodiment, the invention relates to a modular system for storing and outputting electrical energy, the system comprising a stack, the stack comprising a plurality of power packs. Figure 1 illustrates such a stack, comprising only one outlet power pack 200 and two non-outlet power packs 300, a first non-outlet power pack 311 on top of the outlet power pack 200 and a second non-outlet power pack 312 on top of the first power pack 311.

Each power pack also comprises a power coupling module. As for the outlet power pack 200 this power coupling module is presented by 204, while as for the non-outlet power packs 300 the power coupling module is presented by 304.

If a power pack is stacked on top of another pack, for example power pack 311 is stacked on 200, the power coupling modules 204 and 304 of the two packs are configured such that electrical power may be exchanged. On top of the first non-outlet power pack 311 another non-outlet power pack 312 can be stacked likewise.

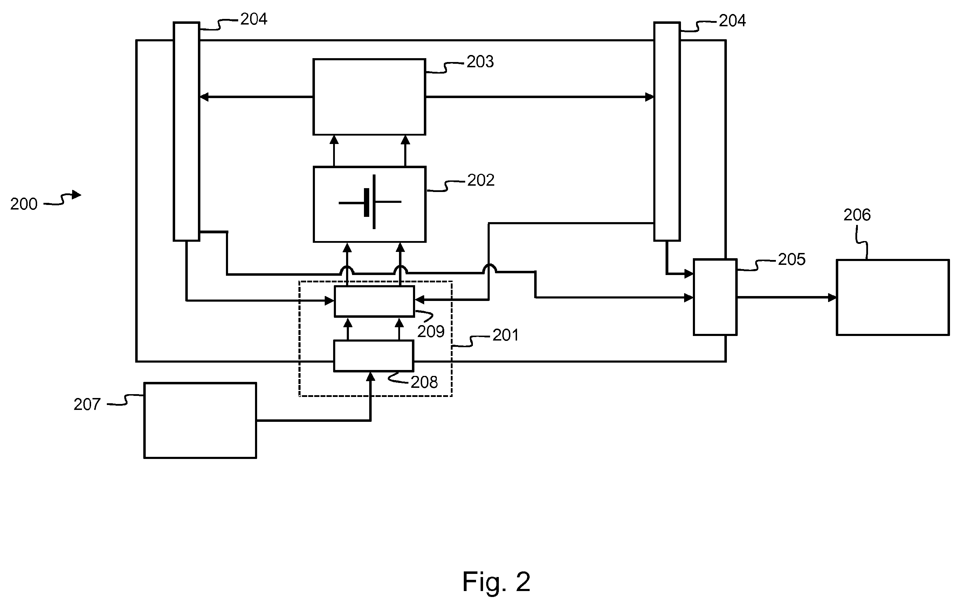

The outlet power pack 200 further comprises a battery 202 and a power controller module 203. Figure 2 is a schematically presentation of this outlet power pack 200. The power controller module 203 is coupled to the battery 202 and to the power coupling module 204.

The outlet power pack 200 is further configured to provide electrical power to a connected external electric device 206. In order to do so, the outlet power pack 200 further comprises a power outlet module 205 coupled to the power coupling module 204. The power outlet module is configured to control the electric power received from its power coupling module 204 and outputted to the connected external electric device 206.

According to an embodiment, the outlet power pack 200 further comprises an internal charger module 209 coupled to its battery 202 and its power coupling module 204. This internal charger module 209 is configured to control the power exchange between its power coupling module 204 to its battery 202 during a charging operation. This charging operation could alternatively also be performed by connecting an external electrical power source 207 to an external charger module 208. This external electrical power source can for example be an electrical power supply connected to an electric grid or even solar panel modules. As shown according to an embodiment both the internal and external charger module could be integrated in a single charger module 201, however it should be clear that only the outlet power pack comprises such an internal charger module 209 connected to its power coupling modules 204. The non-outlet power packs only comprise an external charger module 305 which does not receive power from their power coupling modules, but only from an external power supply.

Thus, a charger module 201 of an outlet power pack comprises an internal charger module 209 and an external charger module 208. The internal charger module 209 is coupled to the battery 202 and to the power coupling module 204 of the outlet power pack 200. The internal charger module 209 of the outlet power pack 200 for example charges the battery 202 of the outlet power pack 200 when the voltage of the battery 202 is lower than the voltage of the power coupling module 204. This charging operation continues for example until the battery 202 reaches a predetermined voltage or stored power level.

The internal charger module 209 may also charge the battery 202 when the voltage or stored power level of the battery 202 is below a predetermined threshold and/or the power required by its power outlet module 205 is lower than a predetermined threshold and/or the power available to its power coupling module 204 from non-outlet power packs 300.

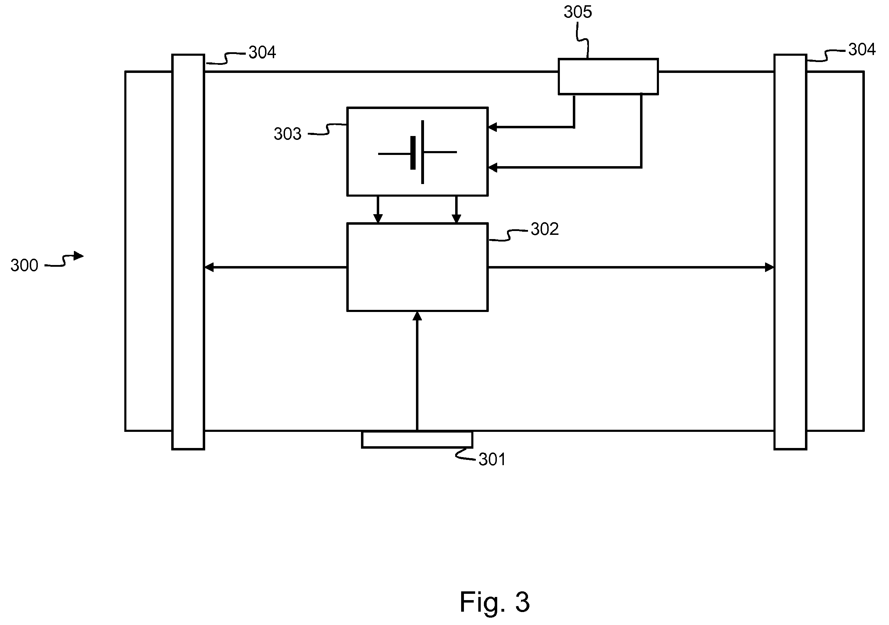

A non-outlet power pack 300 further comprises a battery 303 and a power coupling module 304. Figure 3 is a schematically presentation of an embodiment of a non-outlet power pack 300. The non-outlet power pack also comprises a sensor module 301 and an external charger module 305 connected to its battery 303. It is clear this external charger module 305 is not coupled to the power coupling module 304. The external charger module 305 is coupled to the battery 303. The external charger module 305 functions to control the power exchange from an external power supply to its battery 303 during a charging operation.

The sensor module 301 of the non-outlet power pack 300 is coupled to its power controller module 302. The sensor module 301 is configured such that if the non-outlet power pack 300 is stacked the sensor module 301 can detect the stacked state. Furthermore, since the sensor module 301 is coupled to the power controller module 302 of the non-outlet power pack 300, the power controller module 302 may control the power exchange in such a way that only power from the battery 303 to the power coupling module 302 is provided after that the sensor module 301 has detected the stacked state.

If a non-outlet power pack is removed from the stack, the sensor module 301 will also detect a non-stacked state. In this case, the power controller module 302 will interrupt the power exchange between the battery 303 and the power coupling module 304. By doing so safety issues like an electric arc formation are prevented.

The sensor module 301 can comprises different type of sensors, like for example a capacitive switch, an inductive switch, a NFC tag or a reed switch.

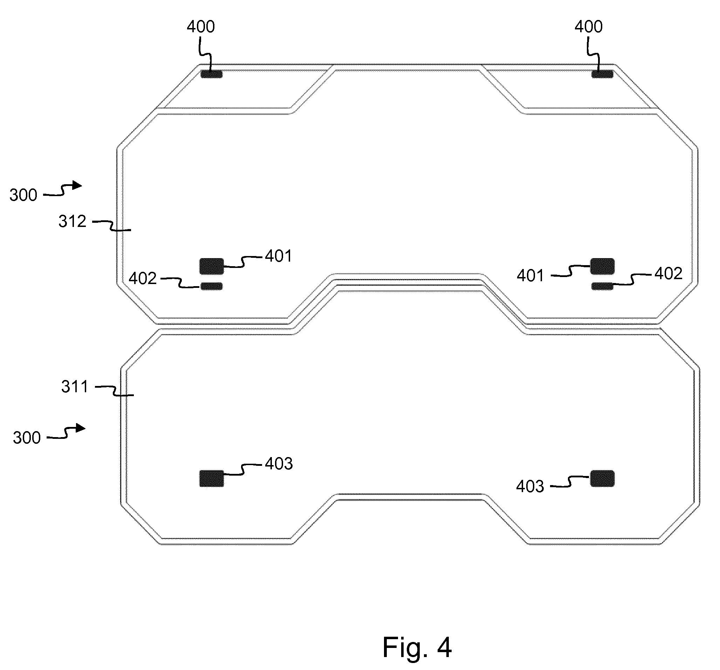

According to an embodiment the sensor module 301 comprises a reed switch. The reed switch is positioned is such a way that the stacked and non-stacked state of a non-outlet power pack can be detected. Figure 4 is an illustration on how a reed switch can be positioned.

In Figure 4 two non-outlet power packs 300 are stacked, more in particular the non-outlet power pack 312 is stacked on top of the non-outlet power pack 311.

In order that a reed switch operates, a magnetic field is required. According to an embodiment of the invention, the magnetic field is produced by the use of a permanent magnet. As for the non-outlet power pack 312 two permanent magnets 400 are incorporated in the power pack 312 and positioned close to the upper top wall of the pack. In the other power pack 311 the magnets are positioned at the same location and presented by 402.

Two reed switches are provided for each power pack, namely the reed switches 401 for the non-outlet power pack 312 and the reed switches 403 for the non-outlet power pack 311. Each reed switch than corresponds to a permanent magnet of a power pack positioned just below the power pack in the stack where the reed switch belongs.

If for example power pack 312 is stacked on top of power pack 311, the reed sensors 401 of power pack 312 will come into close proximity of the magnetic field produced by the permanents magnets 402 of the power pack 311.

Note that in order to be able to operate the reed switch when a non-outlet power pack is stacked on an outlet power pack, the latter pack also comprises permanent magnets positioned in the same way as for a non-outlet power pack.

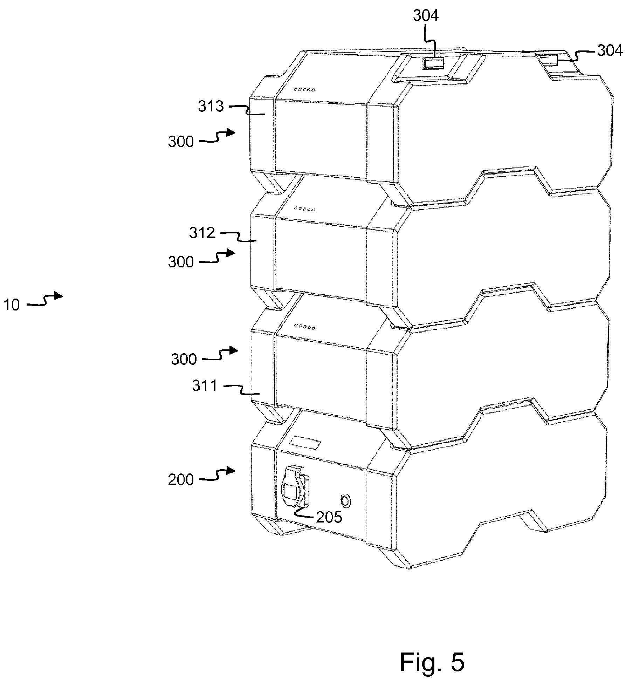

The number of non-outlet power packs that can be stacked on an outlet power pack is not limited the two as schematically presented in Figure 1. Figure 5 is an illustration of a perspective view of a stack wherein three non-outlet power packs 300, namely 311, 312 and 313, are stacked on an outlet power pack 200.

In Figure 5 the power outlet module 205 of the outlet power module 200 is also presented. This power outlet module 205 can be for example a socket of type E but can be off course any outer type of socket or even another type of connector, such as for example an USB-connector.

In Figure 5 also the power coupling module 304 of the top non-outlet power pack 313 is presented.

The outlet power pack 200 in the stack 10 presented in Figure 5 is the lowermost power pack of the stack. Since only an outlet power pack 200 has a power outlet module 205, this way of stacking is convenient since non-outlet power packs 300 can therefore be easily exchanged while the stack 10 remains connected to an external device via the power outlet module 205.

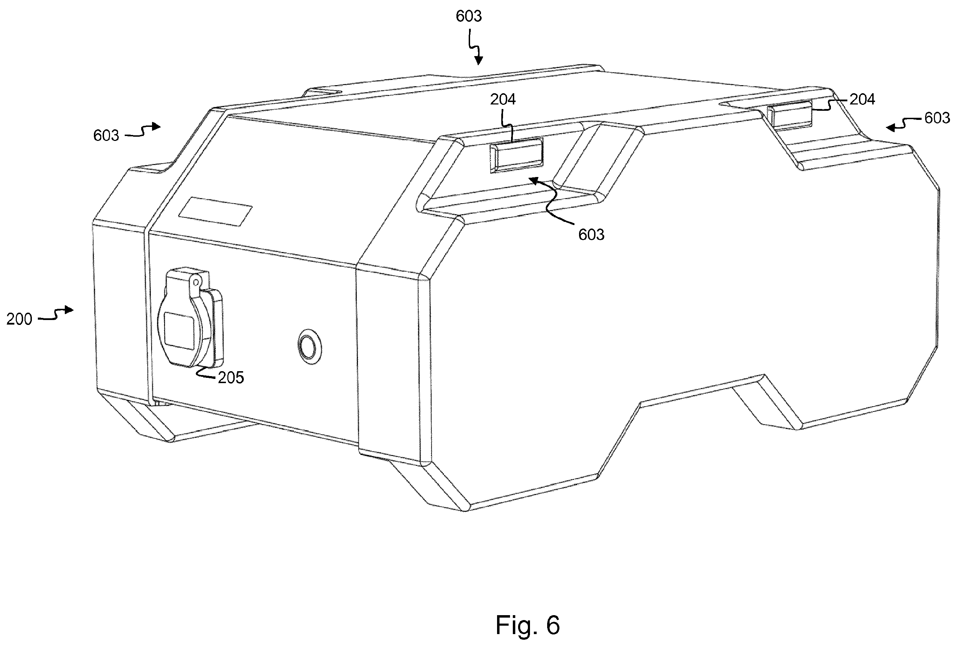

In order to stack power packs in a convenient way notches are made on the top wall of a power pack. Figure 6 is a schematically illustration of a perspective view of an outlet power pack 200 where these notches 603 on the top wall are presented. Furthermore, the power coupling module 204 of the outlet power pack 200 are positioned on the inside of the notches 603.

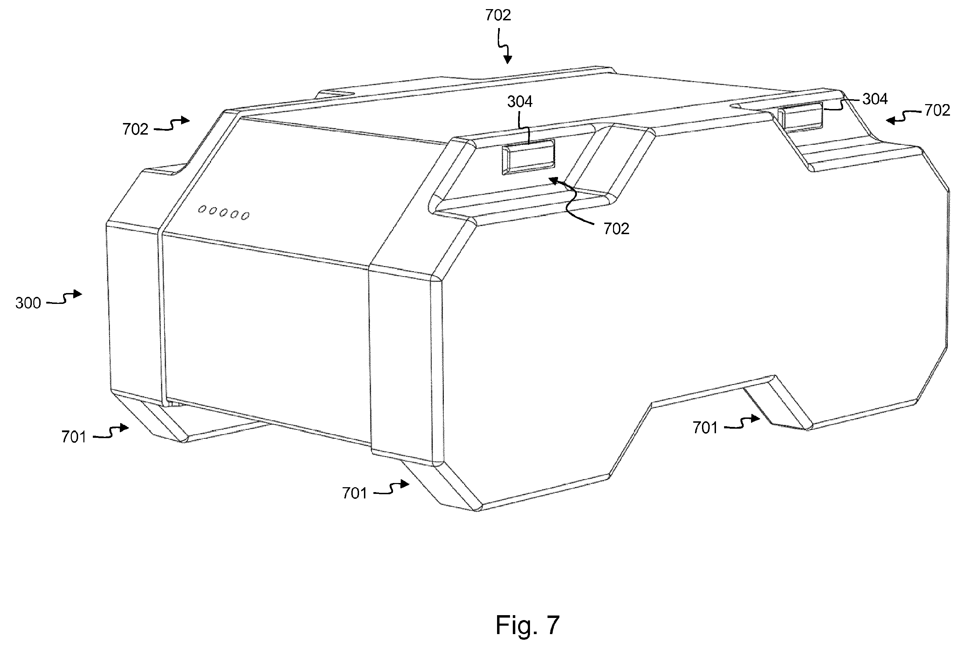

As for a non-outlet power pack again notches are made in the top wall. Figure 7 is a schematically illustration of a perspective view of such a non-outlet power pack. On the inside of the notches 702 the power coupling module 304 of the pack 300 are also illustrated.

For each power pack also supports can be mounted on its bottom wall. This is illustrated in Figure 7 by the supports 701 in each corner of the bottom wall. These supports corresponds formally to the notches made on the top wall. Next, the supports as well as the notches are rotational symmetrical arranged with respect to the midpoint of the bottom wall. By doing so, it is ensured that a power pack may be stacked on top of another power pack in more than one way, yet that improper manipulation is prevented due to the positioning of the supports and notches.

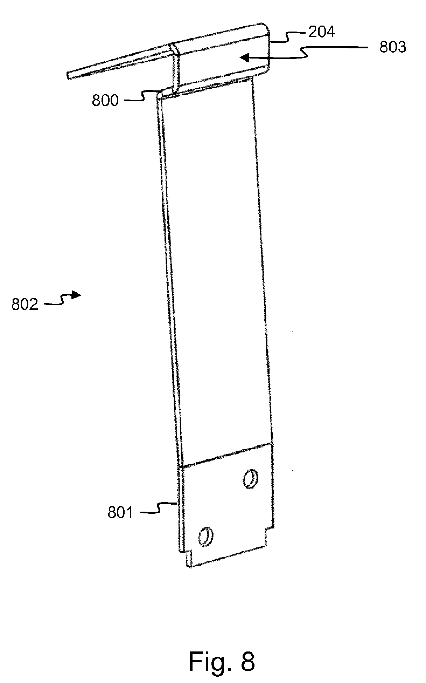

According to an embodiment a power coupling module 204 of an outlet power pack 200 comprises at least one pair of conductors. Figure 8 shows a perspective view of such a conductor 802 of a power coupling module 204 for use in an embodiment of an outlet power pack similar as shown in Figure 6.

The coupling part 803 of the conductor 802 of a power coupling module 204 is resiliently mounted. Because of this, the contact surface of the coupling part 803 may claps the contact surface of a corresponding part of a neighbouring power pack, for example a non-outlet power pack 300 of the stack 10.

A mechanical spring is formed by fixing the bottom side 801 of the conductor 802 and by bending 800 the conductor 802 such that the contact surface 803 may clasp the contact surface of a neighbouring power pack.

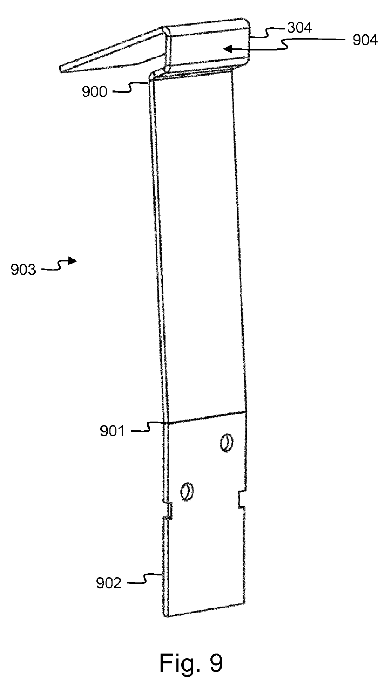

A non-outlet power pack 300 also comprises at least one pair of conductors. Figure 9 schematically shows a perspective view of such a conductor 903 of a power coupling module 304 for use in an embodiment of a non-outlet power pack similar as shown in Figure 7.

The contact surface 904 of the conductor 903 also clasps the contact surface of a corresponding contact surface. This latter contact surface corresponds to 902 and is located at the opposite contact surface 904. Both contact surfaces 904, 902 are resiliently mounted by fixing the conductor and by bending the conductor at two places 900,901.

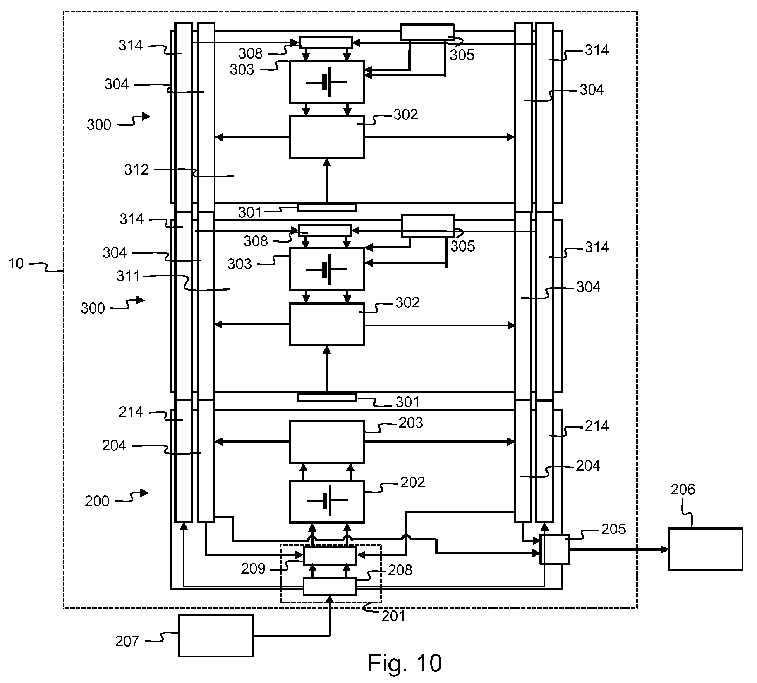

Figure 10 schematically shows an alternative embodiment of a system similar as the embodiment described with reference to Figure 1. Similar elements of the system function generally in a similar way as described above and are referred to by means of similar references. Different from the embodiment of Figure 1, is that now each power pack 200, 300 also comprises a charger coupling module 214, 314. These charger coupling modules 214, 314 are arranged in such a way that, when stacked, the charger coupling module of the power pack is connected to the charger coupling module 214, 314 of neighbouring power packs 200, 300 for the exchange of electrical power. Preferably these charger coupling modules 214, 314, can be embodied similar as described with reference to the power coupling modules 204, 304 above in order to allow for a robust and reliable connection. As further shown in Figure 10, according to this embodiment each non-outlet power pack 300 further also comprises a charger controller module 308. The charger controller module 308 is coupled to the battery 303 and the charger coupling module 314. The charger controller module 308 functions to control the power exchange from the charger coupling module 314 to the battery 303. Finally as shown, according to the embodiment of Figure 10, the outlet power pack 200 comprises, similar as described with reference to Figure 1, an external charger module 208 not coupled to its power coupling module 204. However different from the embodiment of Figure 1, according to the embodiment of Figure 10, the external charger module 208 is also coupled to the charger coupling module 214. In this way the external charger module 208 also functions to control the power exchange from the external power supply 207 to its charger coupling module 214 during a charging operation. It is clear that in this way the power from the external power supply can be provided from the outlet power pack 200 via its charger coupling module 214 and the charger coupling modules 314 of the non-outlet power packs 300 to the charger controller modules 308 of the non-outlet power packs in a controlled way. According to an exemplary embodiment the charger controller module 308 of the non-outlet power pack 300 could for example be controlled to charge the battery 303 of the non-outlet power pack 300 when the voltage of the battery 303 is lower than the voltage of the power coupling module 304 until the battery 303 reaches a predetermined voltage or stored power level. It is clear that alternative charging strategies for the charger controller module 308 are possible, such as for example charging the battery 303 from charger coupling module 314 when the voltage or stored power level of the battery 303 is below a predetermined threshold, and/or when the power needed by the charger controller module 308 is lower than a predetermined threshold; and/or when the power needed by the charger controller module 308 is lower than the power available to its charger coupling module 314 from the external charging module 208 of the outlet power pack 200.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the scope of the claims are therefore intended to be embraced therein.

It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A modular system for storing and outputting electrical energy, the system comprising a stack, the stack (10) comprising a plurality of power packs (200, 300) removably stacked one on top of the other, each power pack (200, 300) comprising:
- a battery (202, 303); and
- a power coupling module (204, 304) configured such that, when stacked, it is connected to the power coupling module (204, 304) of neighbouring power packs (200, 300) for the exchange of electrical power; and
- a power controller module (203, 302) coupled to the battery (203, 303) and power coupling module (204, 304) and configured to control the power exchange from the battery (202, 303) to the power coupling module (204, 304)
**CHARACTERISED IN THAT**
the stack comprises only one outlet power pack (200) configured to provide electrical power to a connected external electric device (206) and one or more non-outlet power packs (300) configured to only exchange electrical power via a neighbouring power pack (200, 300) of the stack (10), wherein:
- the outlet power pack (200) further comprises a power outlet module (205) coupled to its power coupling module (204), its power outlet module (205) configured to control the electric power received from its power coupling module (204) and outputted to a connected external electrical device (206); and
- each non-outlet power pack (300) further comprises a sensor module (301) coupled to the power controller module (302) and configured to detect a stacked state (SS) when this non-outlet power pack (300) is stacked in the stack (10) and a non-stacked state (NS) when this non-outlet power pack (300) is not stacked in the stack (10); and its power controller module (302) is further configured to control the power exchange in such a way that there is only provided power from its battery (303) to its power coupling module (304) after its sensor module (301) has detected the stacked state (SS).

2. System of claim 1, wherein the power controller module (302) of the non-outlet power pack (300) is further configured to control the power exchange in such a way that the power exchange from its battery (303) to its power coupling module (302) is interrupted after its sensor module (301) has detected the non-stacked state.

3. System of claim 1 or 2, wherein the outlet power pack (200) is the lowermost power pack of the stack (10).

4. System of any of the preceding claims, wherein the sensor module (301) of the non-outlet power pack (300) is further configured to detect the stacked state (SS) when its non-outlet power pack (300) is stacked on top of another power pack (200, 300) of the stack (10).

5. System according to any of the preceding claims, wherein, the sensor module (301) is further configured such that:
- during addition of its non-outlet power pack (300) to the stack (10), its power coupling module (304) is already coupled to the power coupling module (204, 304) of the neighbouring power pack (200, 300) before the stacked state (SS) is detected; and/or
- during removal of its non-outlet power pack (300) from the stack (10), its power coupling module (304) is not yet decoupled from the power coupling module (204, 304) of the neighbouring power pack (200, 300) before the non-stacked state (NS) is detected.

6. System according to any of the preceding claims, wherein the power controller module (302) of the non-outlet power pack (300) is further configured to only allow unidirectional exchange of electrical power from the battery (303) towards the power coupling module (304).

7. System according to any of the preceding claims, wherein:
- only the outlet power pack (200) further comprises an internal charger module (209) coupled to its battery (202) and its power coupling module (204) and configured to control the power exchange from its power coupling module (204) to its battery (202) during a charging operation; and/or
- the power packs (200, 300) respectively further comprise an external charger module (208, 305) not coupled to its power coupling module (204, 304) and coupled to its battery (202, 303), and configured to control the power exchange from an external power supply to its battery (202, 303) during a charging operation.

8. System according to any of the preceding claims, wherein:
- each power pack (200, 300) further comprises:
- a charger coupling module (214, 314) configured such that, when stacked, it is connected to the charger coupling module (214, 314) of neighbouring power packs (200, 300) for the exchange of electrical power; and
- each non-outlet power pack (300) further comprises:
- a charger controller module (308) coupled to the battery (303) and the charger coupling module (314) and configured to control the power exchange from the charger coupling module (314) to the battery (303); and
- the outlet power pack (200) comprises:
-- an external charger module (208) not coupled to its power coupling module (204) and coupled to its charger coupling module (214), and configured to control the power exchange from an external power supply to its charger coupling module (214) during a charging operation.

9. System according to any of the preceding claims, wherein the power coupling module (204, 304) comprising at least one pair of conductors each comprising a coupling part positioned such that it is coupled to a corresponding coupling part of a neighbouring power pack of the stack.

10. System of claim 9, wherein the coupling part is resiliently mounted such that its contact surface clasps the contact surface of a corresponding coupling part of a neighbouring power pack of the stack.

11. System of claim 9 or 10, wherein the coupling part comprises a resiliently mounted electrically conductive plate.

12. System according to any of the preceding claims, wherein a power pack comprises supports mounted on its bottom wall in such a way that they formally corresponds to notches on the top wall of a neighbouring power pack in the stack and wherein the supports and coupling parts are rotational symmetrical arranged on its bottom wall with respect to the midpoint of the bottom wall.

13. System according to any of the preceding claims, wherein the sensor module (301) comprises:
- a non-contact proximity or distance sensor; or
- a reed switch and a neighbouring power pack comprises a permanent magnet, the reed switch and the permanent magnet positioned such that a stacked state and/or non-stacked state is detected.

14. Method of operating a system according to any of the preceding claims, wherein the method comprises the further steps of:
- the sensor module (301) of each non-outlet power pack (300) detecting a stacked state (SS) when its non-outlet power pack (300) is stacked in the stack (10), and a non-stacked state (NS) when its non-outlet power pack (300) is not stacked in the stack (10); and
- the power controller module (302) of each non-outlet power pack (300) controlling the power exchange in such a way that there is only provided power from its battery (303) to its power coupling module (302) after its sensor module (301) has detected the stacked state (SS).

15. Method of operating a system according to claim 14, wherein the method comprises the steps of:
- the power controller module (203, 302) of the power pack (200, 300) detecting the voltage of its battery (202, 303) and at its power coupling module (204, 304); and
- the power controller module (203, 302) controlling the power exchange in such a way that there is only provided power from its battery (202, 303) to its power coupling module (204, 304) when the voltage of its battery (202, 303) is higher than or equal to the voltage detected at of the power coupling module; and/or
wherein the method further comprises the step of:
- the power controller module (203) of the outlet power pack (200) only providing power from its battery (202) to its power coupling module (204), if the power received by its power coupling module (204) from the non-outlet power packs (300) of the stack (10) is lower than:
- a predefined threshold;
- the power required by its power outlet module (205); and/or
- the internal charger module (209) of the outlet power pack (200) charging the battery (202) of the outlet power pack (200):
- when the voltage of the battery (202) is lower than the voltage of the power coupling module (204);
- until the battery (202) reaches a predetermined voltage or stored power level;
- when the voltage or stored power level of the battery is below a predetermined threshold; and/or
- the power required by its power outlet module is lower than:
▪ a predetermined threshold; and/or
▪ the power available to its power coupling module (204) from the non-outlet power packs (300); and/or
- the charger controller module (308) of the non-outlet power pack (300) charging the battery (302) of the non-outlet power pack (300):
- when the voltage of the battery (302) is lower than the voltage of the power coupling module (304);
- until the battery (302) reaches a predetermined voltage or stored power level;
- when the voltage or stored power level of the battery (302) is below a predetermined threshold; and/or
- the power needed by the charger controller module (308) is lower than:
▪ a predetermined threshold; and/or
▪ the power available to its charger coupling module (314) from the external charging module (208) of the outlet power pack (200).
